Europäisches Patentamt

European Patent Office

Office européen des brevets

(19)

(11)  EP 1 578 010 A2

(12)  **EUROPÄISCHE PATENTANMELDUNG**

(43) Veröffentlichungstag:
     **21.09.2005  Patentblatt 2005/38**

(51) Int Cl.⁷: **H02M 3/158**, H02J 1/10

(21) Anmeldenummer: **05100818.3**

(22) Anmeldetag: **07.02.2005**

(84) Benannte Vertragsstaaten:
     **AT BE BG CH CY CZ DE DK EE ES FI FR GB GR
     HU IE IS IT LI LT LU MC NL PL PT RO SE SI SK TR**
     Benannte Erstreckungsstaaten:
     **AL BA HR LV MK YU**

(30) Priorität: **18.03.2004  DE 102004013243**

(71) Anmelder: **ROBERT BOSCH GMBH
     70442 Stuttgart (DE)**

(72) Erfinder: **Gronbach, Roman
     70825, Korntal (DE)**

(54)  **Verfahren und Vorrichtung zur Wirkungsgradverbesserung parallelgeschalteter
       Gleichspannungswandler**

(57)      Vorgestellt werden ein Verfahren und eine Vorrichtung zur Regelung des Parallelbetriebs einer Anzahl $Z$ von Gleichspannungswandlern (12, 14, 16, 18, 20), wobei einer der Gleichspannungswandler (12) eine Master-Funktion und $Z$-1 weitere Gleichspannungswandler (14, 16, 18, 20) eine Slave-Funktion ausüben und die Gleichspannungswandler (12, 14, 16, 18, 20) jeweils eine charakteristische Wirkungsgradkennlinie (28) in Abhängigkeit von einem Wandlerstrom ($I_\nu$) aufweisen. Durch den die Master-Funktion ausübenden Gleichspannungswandler (12) wird zusätzlich zu einer Anzahl $N$-1 bereits aktiver Gleichspannungswandler (12, 14, 16) ein weiterer Gleichspannungswandler (18) aktiviert, wenn der Laststrom ($I$) soweit ansteigt, dass die Wandlerströme ($I_\nu$) der $N$-1 bereits aktiven Gleichspannungswandler (12, 14, 16) einen jeweiligen Wandlerstromgrenzwert ($I_{G,\mu}$) auf der charakteristischen Wirkungsgradkennlinie (28) erreichen, für den bei nahezu unverändertem Systemwirkungsgrad ($\eta_{S,\mu}$) ein im Verhältnis ($N$-1)/$N$ reduzierter Stromwert ($I'_{G,\mu}$) auf der charakteristischen Wirkungsgradkennlinie (28) existiert.

Fig. 1

EP 1 578 010 A2

**Beschreibung**

Stand der Technik

Die Erfindung betrifft ein Verfahren sowie eine Vorrichtung zur Regelung des Parallelbetriebs mehrerer parallelgeschalteter Gleichspannungswandler nach der Gattung der unabhängigen Ansprüche.

Um den stetig ansteigenden Leistungsbedarf von Verbrauchern in einem Mehrspannungsnetz - vorzugsweise in einem Mehrspannungsbordnetz eines Kraftfahrzeugs (z.B. Zweispannungsbordnetz mit 14V und 42V) - zu genügen, werden mehrere Gleichspannungswandler parallel geschaltet. Zur Vermeidung von Reglerschwingungen übernimmt dabei in der Regel einer der Gleichspannungswandler als Master die Spannungsregelung im ausgangsseitigen Gesamtsystem, während die untergeordneten Gleichspannungswandler (Slaves) als vom Master gesteuerte Stromquellen zur Erhöhung der Ausgangsleistung beitragen. Die Steuerung der Slave-Gleichspannungswandler in einem Kraftfahrzeug erfolgt beispielsweise durch die Übertragung analoger Stromsollwerte oder digitaler Informationsdaten über ein fahrzeuginternes Bussystem.

Aus der DE 100 15 917 A1 sind ein entsprechendes Verfahren und eine entsprechende Vorrichtung zur Regelung des Parallelbetriebs mehrerer Gleichspannungswandler bekannt, wobei einer der Gleichspannungswandler eine Master-Funktion ausübt und mit einer Spannungsregelung arbeitet. Die anderen Gleichspannungswandler üben eine Slave-Funktion aus und dienen als reine Stromquellen. Die Regelung erfolgt derart, dass beim Vorliegen eines Gesamtstrombedarfs, welcher kleiner ist als ein vorgegebener Stromgrenzwert, der Gesamtstrombedarf durch einen einzigen der Gleichspannungswandler gedeckt wird und beim Vorliegen eines Gesamtstrombedarfs, der größer ist als der vorgegeben Grenzwert, die Deckung des Gesamtstrombedarfs auf alle Gleichspannungswandler zu gleichen Teilen aufgeteilt wird.

Vorteil der Erfindung

Gegenüber dem Stand der Technik weisen das erfindungsgemäße Verfahren und die erfindungsgemäße Vorrichtung den Vorteil auf, dass durch die beanspruchte Regelstrategie einer Anzahl Z von Gleichspannungswandlern, wobei einer der Gleichspannungswandler eine Master-Funktion und Z-1 Gleichspannungswandler einer Slave-Funktion ausüben, die Stromverteilung zwischen den Gleichspannungswandlern hinsichtlich eines vorzugsweise in jedem Betriebspunkt größtmöglichen Systemwirkungsgrades des Gesamtsystems optimiert wird. Dabei wird durch den die Master-Funktion ausübenden Gleichspannungswandler zusätzlich zu einer Anzahl $N$-1 bereits aktiver Gleichspannungswandler ein weiterer Gleichspannungswandler aktiviert, wenn ein von einer Last benötigter Laststrom soweit ansteigt, dass die einzelnen Wandlerströme der $N$-1 bereits aktiven Gleichspannungswandler einen jeweiligen Wandlerstromgrenzwert auf einer charakteristischen Wirkungsgradkennlinie der Gleichspannungswandler erreichen, für den bei nahezu unverändertem Systemwirkungsgrad ein im Verhältnis $(N$-1$)/N$ reduzierter Stromwert auf der charakteristischen Wirkungsgradkennlinie existiert. Auf diese Weise ist es zudem möglich, die Sicherheit des Systems infolge einer gestiegenen Redundanz zu erhöhen sowie die Wärmeabfuhr der einzelnen Gleichspannungswandler zu verbessern.

Vorzugsweise erfolgt die Aktivierung eines weiteren Gleichspannungswandlers durch den die Master-Funktion ausübenden Gleichspannungswandler, wenn der Laststrom soweit ansteigt, dass die Wandlerströme der $N$-1 bereits aktiven Gleichspannungswandler einen jeweiligen Wandlerstromgrenzwert auf der charakteristischen Wirkungsgradkennlinie erreichen, für den sich der Laststrom bei einem nahezu unveränderten Systemwirkungsgrad zu gleichen Teilen auf die $N$ aktivierten Gleichspannungswandler verteilen lässt. Das erfindungsgemäße Verfahren und die erfindungsgemäße Vorrichtung liefern demnach eine mit Bezug auf den größtmöglichen Gesamtwirkungsgrad optimierte Strategie für die Aktivierung und Deaktivierung einzelner Gleichspannungswandler im Teillastbetrieb mit höherer Sicherheit und Redundanz sowie verbesserter Wärmeabfuhr, wobei die Deaktivierung eines Gleichspannungswandlers in zu obigem Verfahren umgekehrter Reihenfolge erfolgt.

Zur Vermeidung von Reglerschwingungen beim Parallelbetrieb der Gleichspannungswandler, sieht die Erfindung in vorteilhafter Weise vor, dass zumindest einer der Gleichspannungswandler als Spannungsquelle sowie die übrigen Gleichspannungswandler als Stromquellen arbeiten, wobei in einer möglichen Ausgestaltungsform der die Master-Funktion ausübende Gleichspannungswandler als Spannungsquelle arbeitet.

Um die Regelung oder Steuerung der die Slave-Funktion ausübenden Gleichspannungswandler durch den die Master-Funktion ausübenden Gleichspannungswandler zu ermöglichen, ist in einer weiteren Ausgestaltungsform eine zusätzliche Verbindung zwischen den Gleichspannungswandlern, beispielsweise in Gestalt eines CAN-Busses, für den Datenaustausch vorgesehen.

Ein weiterer Vorteil der Erfindung ergibt sich, wenn bis auf eine Anzahl M aktiver Gleichspannungswandler zur Deckung eines Grundlaststroms die verbleibenden $N$-$M$ aktiven Gleichspannungswandler jeweils mit einem möglichst gleichen Wandlerwirkungsgrad oder mit möglichst gleich großem Wandlerstrom arbeiten. Auf diese Weise können zum Beispiel die M aktiven Gleichspannungswandler, die zur Deckung des Grundlaststroms erforderlich sind, stets mit ihrem maximalen Wandlerwirkungsgrad betrieben werden, während die übrigen Gleichspannungswandler nach dem eingangs beschriebenen Verfahren betreibbar sind.

Weitere Vorteile der Erfindung ergeben sich durch die in den abhängigen Ansprüchen angegebenen Maßnahmen sowie aus der Zeichnung und der nachfolgenden Beschreibung.

Zeichnung

Die Erfindung wird im Folgenden anhand der Figuren 1 bis 4 beispielhaft erläutert, wobei gleiche Bezugszeichen in den Figuren auf Merkmale mit einer gleichen Bedeutung hinweisen. Es zeigen

Fig. 1: ein Blockschalbild einer Ausführungsform eines erfindungsgemäßen Mehrspannungsbordnetzes in einem Kraftfahrzeug mit zwei Spannungsebenen,

Fig. 2: ein Diagramm einer charakteristischen Wirkungsgradkennlinie in Abhängigkeit vom Wandlerstrom,

Fig. 3: ein Diagramm zur Veranschaulichung des erfindungsgemäßen Verfahrens und

Fig. 4: eine erfindungsgemäße Look-Up-Tabelle.

Beschreibung

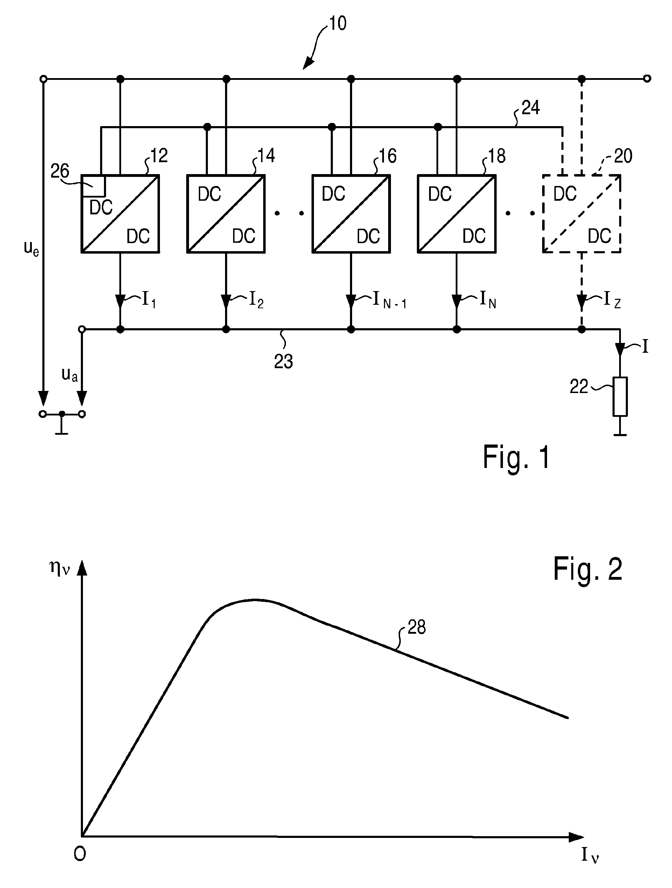

In Figur 1 ist das Blockschaltbild eines Mehrspannungsbordnetzes 10 in einem Kraftfahrzeug mit einer ersten, durch eine nicht gezeigte Batterie des Kraftfahrzeugs definierten Spannungsebene $U_e$ (z.B. 42V) und einer aus der Parallelschaltung von Z Gleichspannungswandlern 12, 14, 16, 18, 20 resultierenden, zweiten Spannungsebene $U_a$ (z. B. 14V) zur Versorgung einer Last 22 dargestellt, wobei die Ausgänge der Gleichspannungswandler 12, 14, 16, 18, 20 miteinander und mit der Last 22 über eine Versorgungsleitung 23 verbunden sind. Die Last 22 kann jeder elektrische Verbraucher des Kraftfahrzeugs wie beispielsweise ein Motor zur Sitzverstellung, ein Kühlgebläse, ein Fensterhebermotor oder dergleichen sein. Ebenso kann die Last 22 aber auch die Gesamtimpedanz mehrerer gleichzeitig betriebener, elektrischer Verbraucher des Kraftfahrzeugs symbolisieren. Die Gleichspannungswandler 12, 14, 16, 18, 20 verfügen über eine gemeinsame Verbindung 24 zum Zwecke eines Datenaustausches, wobei die Verbindung 24 beispielsweise als bereits vorhandener CAN-Bus des Kraftfahrzeuges ausgebildet sein kann. Alternativ ist aber auch eine vom restlichen Bordnetz des Kraftfahrzeugs autarke Verbindung 24 oder ein Datenaustausch über die Versorgungsleitung 23 im Sinne einer Power-Line-Kommunikation denkbar.

Um das Auftreten von Reglerschwingungen zu vermeiden, übt der Gleichspannungswandler 12 eine Master-Funktion aus und arbeitet als Spannungsquelle. Mit Hilfe der Verbindung 24 regelt bzw. steuert der Gleichspannungswandler 12 die übrigen Z-1 als Stromquellen arbeitenden Gleichspannungswandler 14, 16, 18, 20, denen somit eine Slave-Funktion zukommt. Dabei wird von einem in dem die Master-Funktion ausübenden Gleichspannungswandler 12 integrierten Stromerfassungsmittel 26 der für die Versorgung der Last 22 erforderliche Laststrom $I$ ermittelt. Die Ermittlung des Laststromes $I$ kann zum Beispiel durch eine einfache Spannungsmessung über einen nicht gezeigten Shunt-Widerstand in der Versorgungsleitung 23 sowie einer entsprechenden Umrechnung der gemessenen Spannung in einen Stromwert oder durch eine direkte Strommessung in der Versorgungsleitung 23 realisiert sein. Das Stromerfassungsmittel 26 kann sich auch außerhalb des Gleichspannungswandlers 12 befinden. In diesem Fall ist eine zusätzliche Verbindung zwischen dem Gleichspannungswandler 12 und dem Stromerfassungsmittel 26 zum Zwecke einer Datenübertragung erforderlich. Gemäß dem nachfolgend beschriebenen Verfahren führt nun der die Master-Funktion ausübende Gleichspannungswandler 12 über die Verbindung 24 den die Slave-Funktion ausübenden Gleichspannungswandlern 14, 16, 18, 20 entsprechend dem erforderlichen Laststrom $I$ eine Information bezüglich der von ihnen zu liefernden Wandlerströme $I_\nu$ zu, wobei aufgrund der Parallelschaltung aller Z Gleichspannungswandler 12, 14, 16, 18, 20 gilt

$$I = \sum_{\nu=1}^{Z} I_\nu \ .$$

Figur 2 zeigt eine charakteristische Wirkungsgradkennlinie 28 eines beliebigen, $\nu$-ten Gleichspannungswandlers, wobei ein stark nichtlinearer Zusammenhang zwischen dem Wandlerstrom $I_\nu$ und dem Wandlerwirkungsgrad $\eta_\nu$ zu erkennen ist und der Wandlerwirkungsgrad $\eta_\nu$ sich definiert aus dem Verhältnis von Ausgangs- zu Eingangsleistung des ν -ten Gleichspannungswandlers.

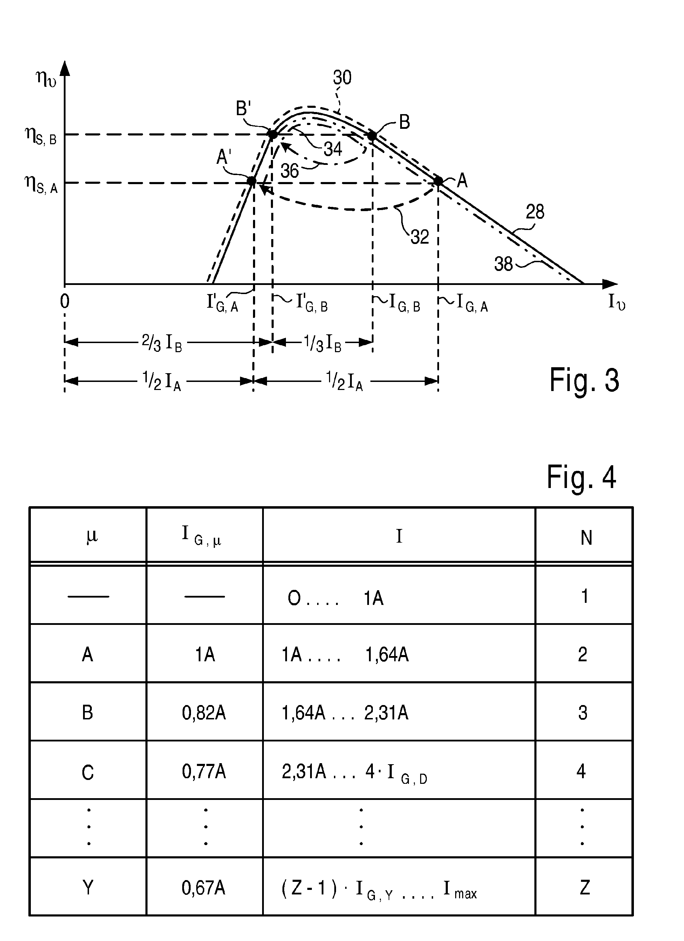

Anhand der charakteristischen Wirkungsgradkennlinie 28 soll nun das erfindungsgemäße Verfahren zur Regelung des Parallelbetriebs dreier Gleichspannungswandler 12, 14, 20 unter Einbeziehung von Figur 3 beschrieben werden. Dargestellt ist wiederum die bereits in Figur 2 gezeigte, charakteristische Wirkungsgradkennlinie 28 des ν-ten Gleichspannungswandlers in Abhängigkeit vom Wandlerstrom $I_v$. In der Regel weisen die einzelnen Gleichspannungswandler 12, 14, 20 nahezu identische, charakteristische Wirkungsgradkennlinien auf, so dass eine Beschreibung des Verfahrens allein auf Grundlage von Figur 3 sehr gut möglich ist. Zwar kann es, beispielsweise aufgrund von Serienstreuungen, zu leichten Abweichungen der charakteristischen Wirkungsgradkennlinien der einzelnen Gleichspannungswandler 12, 14, 20 kommen, diese sind aber für das erfindungsgemäße Verfahren von untergeordneter Bedeutung.

Ausgehend von einem erforderlichen Laststrom $I > 0$ wird zunächst nur der die Master-Funktion ausübende Gleichspannungswandler 12 entsprechend der gestrichelten Kurve 30 mit einem Wandlerstrom $I_1 = I$ betrieben. Die übrigen beiden Gleichspannungswandler 14, 20 leisten in diesem Fall keinen Beitrag zur Versorgung der Last 22 und es gilt $I_2 = I_3 = 0$. Wird nun zum Beispiel ein weiterer, elektrischer Verbraucher zur Last 22 hinzugeschaltet, weil der Kraftfahrer einen Lenk- oder Bremsvorgang einleitet, so erreicht der Wandlerstrom $I_1$ im Punkt A einen ersten Wandlerstromgrenzwert $I_{G,A}$ auf der charakteristischen Wirkungsgradkennlinie 28. Dieser Punkt A zeichnet sich dadurch aus, dass gemäß des gestrichelt dargestellten Pfeils 32 bei einem nahezu unverändertem Systemwirkungsgrad $\eta_{S,A}$ ein weiterer Punkt A' mit einem um die Hälfte reduzierten Stromwert $I'_{G,A}$ auf der charakteristischen Wirkungsgradkennlinie 28 existiert. Da der erforderliche Laststrom $I$ somit ohne Veränderung des Systemwirkungsgrades $\eta_{S,A}$ zu gleichen Teilen auf zwei Gleichspannungswandler aufteilbar ist, erfolgt durch den die Master-Funktion ausübenden Gleichspannungswandler 12 eine Aktivierung des zweiten, eine Slave-Funktion ausübenden Gleichspannungswandlers 14. Ausgehend von Punkt A' sind nun zwei Gleichspannungswandler 12, 14 mit jeweils gleichen Wandlerströmen $I_1 = I_2 = I/2$ aktiv und es gilt: $I = I_1 + I_2$, $I_3 = 0$. Ein weiteres Ansteigen des Laststrom $I$ und demzufolge auch der beiden Wandlerströme $I_1$ und $I_2$, beispielsweise aufgrund einer vom Kraftfahrer zusätzlich eingeschalteten Beleuchtung, ist durch den strichpunktierten Verlauf 34 auf der charakteristischen Wirkungsgradkennlinie 28 eines der beiden aktiven Gleichspannungswandler 12, 14 symbolisiert. Steigen die Wandlerströme $I_1 = I_2$ soweit an, dass Punkt B auf der charakteristischen Wirkungsgradkennlinie 28 erreicht ist, wird durch den die Master-Funktion ausübenden Gleichspannungswandler 12 der dritte und letzte Gleichspannungswandler 20 aktiviert. Dabei zeichnet sich der Punkt B gemäß des strichpunktiert dargestellten Pfeils 36 wiederum dadurch aus, dass ein entsprechender Punkt B' existiert, in dem bei unverändertem Systemwirkungsgrad $\eta_{S,B}$ ein Stromwert $I'_{G,B}$ gefunden werden kann, der gegenüber dem Wandlerstromgrenzwert $I_{G,B}$ im Verhältnis 2/3 reduziert ist: $I'_{G,B} = \frac{2}{3} \cdot I_{G,B}$. Der Laststrom $I$ teilt sich demnach ab Punkt B' zu gleichen Teilen $I_1 = I_2 = I_3 = I/3$ auf alle drei aktiven Gleichspannungswandler auf, und es gilt: $I = I_1 + I_2 + I_3$.

Steigt der Laststrom $I$ schließlich über den letzten Wandlerstromgrenzwert $I_{G,B}$ an, so werden alle Gleichspannungswandler 12, 14, 20 zur Deckung des Laststroms $I$ bei weiterhin möglichst gleich großen Wandlerströmen $I_v$ und/oder Wandlerwirkungsgraden $\eta_v$ ausgehend von Punkt B' gemäß dem Verlauf 38 auf der charakteristischen Wirkungsgradkennlinie 28 bis an ihre Belastungsgrenze betrieben.

Das erfindungsgemäße Verfahren lässt sich unter Berücksichtigung von Figur 1 auch allgemein gültig formulieren. Danach wird von dem die Master-Funktion ausübenden Gleichspannungswandler 12 zusätzlich zu einer Anzahl $N$-1 bereits aktiver Gleichspannungswandler 12, 14, 16 ein weiterer Gleichspannungswandler 18 aktiviert, wenn der Laststrom $I$ soweit ansteigt, dass die Wandlerströme $I_v$ der $N$-1 bereits aktiven Gleichspannungswandler 12, 14, 16 einen jeweiligen Wandlerstromgrenzwert $I_{G,\mu}$, $\mu = A,...,Y$, auf der charakteristischen Wirkungsgradkennlinie 28 erreichen, für den bei nahezu unverändertem Systemwirkungsgrad $\eta_{S,\mu}$ ein im Verhältnis $(N$-1$)/N$ reduzierter Stromwert $I'_{G,\mu}$ auf der charakteristischen Wirkungsgradkennlinie 28 existiert. Der Punkt Y beschreibt in diesem Zusammenhang einen letzten Wandlerstromgrenzwert $I_{G,Y}$.

Aus Figur 3 ist erkennbar, dass der Systemwirkungsgrad $\eta_{S,\mu}$ durch das erfindungsgemäße Verfahren stets seinen größtmöglichen Wert einnimmt. Da sich der Systemwirkungsgrad $\eta_{S,\mu}$ aus dem arithmetischen Mittelwert der Wandlerwirkungsgrade $\eta_v$ nach der Beziehung

$$\eta_{S,\mu} \;=\; \frac{1}{N} \cdot \sum_{v=1}^{N} \eta_v \;, \qquad \mu \;=\; A, \ldots, Y$$

berechnet, liefert ein andersgeartetes als das erfindungsgemäße Verfahren nicht den größtmöglichen Systemwirkungsgrad. Dies wäre zum Beispiel dann der Fall, wenn zwar ein erster Gleichspannungswandler mit seinem größtmöglichen Wandlerwirkungsgrad arbeitet, ein weiterer Gleichspannungswandler jedoch zunächst mit einem sehr geringen Wandlerwirkungsgrad aktiviert werden müsste, so dass der Systemwirkungsgrad deutlich reduziert würde.

Das erfindungsgemäße Verfahren eignet sich natürlich nicht nur zur Aktivierung von weiteren Gleichspannungswandlern, sondern kann auch auf eine Deaktivierung eines Gleichspannungswandlers im Falle eines fallenden Laststroms $I$ angewendet werden. In diesem Fall gilt jedoch eine entsprechend umgekehrte Reihenfolge. D.h. von dem die Master-Funktion ausübenden Gleichspannungswandler 12 wird einer von $N$ aktiven Gleichspannungswandlern deaktiviert, wenn der Laststrom $I$ soweit abfällt, dass die Wandlerströme $I_\nu$ der $N$ aktiven Gleichspannungswandler einen jeweiligen Wandlerstromgrenzwert $I'_{G,\mu}$ auf der charakteristischen Wirkungsgradkennlinie 28 erreichen, für den bei nahezu unverändertem Systemwirkungsgrad $\eta_{S,\mu}$ ein im Verhältnis $N/(N-1)$ erhöhter Stromwert $I_{G,\mu}$ auf der charakteristischen Wirkungsgradkennlinie 28 existiert. Auch bei der Deaktivierung bleibt somit das wesentliche Prinzip, wonach sich der Laststrom $I$ zu gleichen Teilen auf alle $N$-1 verbleibenden, aktiven Gleichspannungswandler verteilen lässt, erhalten. Es gilt jedoch zu beachten, dass bei der Deaktivierung nicht wie noch bei der Aktivierung in den Punkten A bis Y mit den entsprechenden, auf der charakteristischen Wandlerstromkennlinie 28 definierten Wandlerstromgrenzwerten $I_{G,A}$ bis $I_{G,Y}$ sondern in den Punkten $A'$ bis $Y'$ mit den entsprechenden Wandlerstromgrenzwerten $I'_{G,A}$ bis $I'_{G,Y}$ geschaltet wird, wobei $I'_{G,A}$ nun einen letzten und $I'_{G,Y}$ einen ersten Wandlerstromgrenzwert auf der charakteristischen Wirkungsgradkennlinie 28 beschreiben. Die jeweiligen Wandlerstromgrenzwerte im Falle einer Aktivierung oder Deaktivierung hängen somit unmittelbar davon ab, ob der Laststrom $I$ bzw. die Wandlerströme $I_\nu$ zu- oder abnehmen.

In einer alternativen Ausgestaltungsform kann es auch vorgesehen sein, dass nicht sämtliche Z parallelgeschalteten Gleichspannungswandler 12, 14, 16, 18, 20 für das erfindungsgemäße Verfahren herangezogen werden. Dies ist zum Beispiel dann der Fall, wenn der in Figur 1 gestrichelt dargestellte Gleichspannungswandler 20 zur Deckung eines Grundlaststroms - beispielsweise für den Standby-Betrieb eines elektrischen Verbrauchers der Last 22 - dient und demzufolge einen konstanten Strom $I_Z$ liefern muss. Eine derartige Aufgabe kann auch durch eine Anzahl $M$ stets aktiver Gleichspannungswandler gelöst werden. In diesem Fall arbeiten nur $N$-$M$ aktive Gleichspannungswandler 12, 14, 16, 18 jeweils mit einem möglichst gleichen Wandlerwirkungsgrad $\eta_\nu$ oder mit möglichst gleich großem Wandlerstrom $I_\nu$.

Da die an dem erfindungsgemäßen Verfahren beteiligten Gleichspannungswandler stets einen nahezu gleichen Wandlerstrom $I_\nu$ oder Wandlerwirkungsgrad $\eta_\nu$ liefern sollen, sei angemerkt, dass es ausreicht, wenn das in Figur 1 gezeigte Stromerfassungsmittel 26 statt des Laststromes $I$ lediglich den Wandlerstrom $I_1$ des die Master-Funktion ausübenden Gleichspannungswandlers 12 ermittelt. Für diesen gilt dann mit der bekannten Anzahl $N$ der aktiven Gleichspannungswandler die Beziehung $I_1 = I_\nu = I / N$.

Zur Durchführung des erfindungsgemäßen Verfahrens ist es zweckmäßig, dass der die Master-Funktion ausübende Gleichspannungswandler 12 auf einem Algorithmus unter Berücksichtigung der abgespeicherten, charakteristischen Wirkungsgradkennlinie 28 der Gleichspannungswandler 12, 14, 16, 18, 20 basiert. Alternativ oder ergänzend kann auch eine in der Figur 4 gezeigte Look-Up-Tabelle 40 verwendet werden, in der die entsprechenden Wandlerstromgrenzwerte $I_{G,\mu}$ und/oder Bereiche des Laststroms $I$ in Abhängigkeit von der Anzahl $N$ der zu aktivierenden Gleichspannungswandler 12, 14, 16, 18, 20 abgelegt sind. Liegt zum Beispiel der Laststrom $I$ in einem Bereich zwischen Null und 1A, d.h. ist der erste Wandlerstromgrenzwert $I_{G,A}$ = 1A durch den Wandlerstrom $I_1$ noch nicht erreicht, so ist nur der die Master-Funktion ausübende Gleichspannungswandler 12 aktiv. Steigt der Wandlerstrom $I_1$ an, so dass der erste Wandlerstromgrenzwert $I_{G,A}$ = 1A (Punkt A) erreicht ist, erfolgt die Aktivierung des zweiten Gleichspannungswandlers 14 und die beiden Wandlerströme $I_1$ und $I_2$ teilen sich bei nahezu unverändertem Systemwirkungsgrad $\eta_{S,A}$ zu gleichen Teilen auf den Laststrom $I$ auf, so dass gilt: $I_1 = I_2$ = 0,5A (vgl. Punkt A' in Figur 3). Steigt der Laststrom $I$ weiter an, so wird durch den die Master-Funktion ausübenden Gleichspannungswandler 12 bei Erreichen des zweiten Wandlerstromgrenzwertes $I_{G,B}$ = 0,82A (Punkt B) ein dritter Gleichspannungswandler aktiviert und es gilt bei wiederum nahezu unverändertem Systemwirkungsgrad $\eta_{S,B}$: $I'_{G,B} = \frac{2}{3}\cdot I_{G,B}$ = 0,547A, d.h. jeder der drei aktiven Gleichspannungswandler liefert nun einen Wandlerstrom $I_1 = I_2 = I_3$ = 0,547A. Für den Laststrom $I$ ergibt sich dann $I = I_1 + I_2 + I_3$ = 1,64A. Sind ab dem letzten Wandlerstromgrenzwert $I_{G,Y}$ = 0,67A sämtliche Z parallelgeschalteten Gleichspannungswandler 12, 14, 16, 18, 20 aktiviert, so werden sie ab einem Laststromwert $I = (Z - 1) \cdot I_{G,Y}$ bis an ihre Belastungsgrenze betrieben oder bis ein maximal erlaubter Laststrom $I_{max}$ erreicht ist. Da ein direkter Zusammenhang zwischen den Wandlerstromgrenzwerten $I_{G,\mu}$ und den entsprechenden Bereichen des Laststroms $I$ besteht, ist es ausreichend, in der Look-Up-Tabelle 40 einen dieser beiden Parameter für die Ausführung des erfindungsgemäßen Verfahrens abzulegen und entweder den Wandlerstrom $I_1$ oder den Laststrom $I$ mittels des Stromerfassungsmittels 26 nach der oben beschriebenen Vorgehensweise zu messen. Ebenso können aber auch beide Parameter für das erfindungsgemäße Verfahren herangezogen werden.

Sowohl aus Figur 3 als auch aus der Look-Up-Tabelle 40 in Figur 4 ist zu erkennen, dass die Wandlerstromgrenzwerte $I_{G,\mu}$ gegen einen globalen Grenzwert konvergieren. Dieser globale Grenzwert ist in der Look-Up-Tabelle 40 mit $I_{G,Y}$ = 0,67A angegeben. Er bezieht sich gemäß der charakteristischen Wirkungsgradkennlinie 28 in Figur 3 auf den maximalen Systemwirkungsgrad $\eta_{S,Y}$, der beispielsweise bei 60% liegen kann. Steigt der Laststrom $I$ ab diesem Punkt weiter an, d.h. sind bereits sämtliche Gleichspannungswandler 12, 14, 16, 18, 20 aktiv, so sinkt zwar der Systemwirkungsgrad gemäß der charakteristischen Wirkungsgradkennlinie 28 mit zunehmendem Laststrom $I$, gleichzeitig ist aber weiterhin sichergestellt, dass das Gesamtsystem aller parallelgeschalteten Gleichspannungswandler 12, 14, 16, 18, 20 mit dem größtmöglichen Systemwirkungsgrad arbeitet.

Die in der Figur 4 gezeigte Look-Up-Tabelle 40 gestattet auf sehr einfache Weise eine Berücksichtigung unterschiedlicher, charakteristischer Wirkungsgradkennlinien der einzelnen Gleichspannungswandler 12, 14, 16, 18, 20 durch entsprechende Veränderung der in den Punkten A bis Y definierten Wandlerstromgrenzwerte $I_{G,A}$ bis $I_{G,Y}$ bzw. der entsprechenden Bereiche des Laststroms $I$.

Für eine Deaktivierung bereits aktiver Gleichspannungswandler ist es erforderlich, gemäß dem zuvor beschriebenen Verfahren, in der Look-Up-Tabelle 40 statt der Punkte A bis Y mit den dort definierten Wandlerstromgrenzwerten $I_{G,A}$ bis $I_{G,Y}$ die Punkte $A'$ bis $Y'$ mit den entsprechenden Wandlerstromgrenzwerten $I'_{G,A}$ bis $I'_{G,Y}$ abzulegen. Demnach sind für den erfindungsgemäßen Ablauf des Verfahrens entweder zwei unabhängig voneinander ausgelegte Look-Up-Tabellen oder aber eine gemeinsame Look-Up-Tabelle mit den entsprechenden Wandlerstromgrenzwerten für die Aktivierung und die Deaktivierung der Gleichspannungswandler zu erzeugen.

Es sei abschließend noch darauf hingewiesen, dass das gezeigte Ausführungsbeispiel weder auf die Figuren 1 bis 4 noch auf die genannten Werte für die Wandlerstromgrenzwerte $I_{G,\mu}$, den Laststrom $I$, die Anzahl Z der parallelgeschalteten Gleichspannungswandler, etc. beschränkt ist. Insbesondere sei erwähnt, dass die aufgeführten Gleichungen aufgrund von Serienstreuungen oder anders gearteten Abweichungen der Gleichspannungswandler in der Praxis auch vom theoretisch idealen Wert abweichen können und somit ebenfalls in guter Näherung gelten.

## Patentansprüche

1. Verfahren zur Regelung des Parallelbetriebs einer Anzahl Z von Gleichspannungswandlern (12, 14, 16, 18, 20), wobei einer der Gleichspannungswandler (12) eine Master-Funktion und Z-1 weitere Gleichspannungswandler (14, 16, 18, 20) eine Slave-Funktion ausüben und die Gleichspannungswandler (12, 14, 16, 18, 20) jeweils eine charakteristische Wirkungsgradkennlinie (28) in Abhängigkeit von einem Wandlerstrom ($I_v$) aufweisen, **dadurch gekennzeichnet, dass** durch den die Master-Funktion ausübenden Gleichspannungswandler (12) zusätzlich zu einer Anzahl $N$-1 bereits aktiver Gleichspannungswandler (12, 14, 16) ein weiterer Gleichspannungswandler (18) aktiviert wird, wenn der Laststrom (I) soweit ansteigt, dass die Wandlerströme ($I_v$) der $N$-1 bereits aktiven Gleichspannungswandler (12, 14, 16) einen jeweiligen Wandlerstromgrenzwert ($I_{G,\mu}$) auf der charakteristischen Wirkungsgradkennlinie (28) erreichen, für den bei nahezu unverändertem Systemwirkungsgrad ($\eta_{S,\mu}$) ein im Verhältnis ($N$-1)/$N$ reduzierter Stromwert ($I'_{G,\mu}$) auf der charakteristischen Wirkungsgradkennlinie (28) existiert.

2. Verfahren nach Anspruch 1, **dadurch gekennzeichnet, dass** durch den die Master-Funktion ausübenden Gleichspannungswandler (12) ein weiterer Gleichspannungswandler (18) aktiviert wird, wenn der Laststrom (I) soweit ansteigt, dass die Wandlerströme ($I_v$) der N-1 bereits aktiven Gleichspannungswandler (12, 14, 16) einen jeweiligen Wandlerstromgrenzwert ($I_{G,\mu}$) auf der charakteristischen Wirkungsgradkennlinie (28) erreichen, für den sich der Laststrom (I) bei einem nahezu unveränderten Systemwirkungsgrad ($\eta_{S,\mu}$) zu gleichen Teilen auf die $N$ aktivierten Gleichspannungswandler (12, 14, 16, 18) verteilen lässt.

3. Verfahren nach einem der vorhergehenden Ansprüche, **dadurch gekennzeichnet, dass** die Aktivierung des weiteren Gleichspannungswandlers (18) durch den die Master-Funktion ausübenden Gleichspannungswandler (12) mit Hilfe eines Algorithmus auf Grundlage der abgespeicherten, charakteristischen Wirkungsgradkennlinie (28) der Gleichspannungswandler (12, 14, 16, 18, 20) erfolgt.

4. Verfahren nach einem der Ansprüche 1 oder 2, **dadurch gekennzeichnet, dass** zur Regelung des Parallelbetriebs mehrerer Gleichspannungswandler (12, 14, 16, 18, 20) durch den die Master-Funktion ausübenden Gleichspannungswandler (12) eine Look-Up-Tabelle (40) verwendet wird, in der die entsprechenden Wandlerstromgrenzwerte ($I_{G,\mu}$) und/oder Bereiche des Laststroms ($I$) in Abhängigkeit von der Anzahl der zu aktivierenden Gleichspannungswandler (12, 14, 16, 18, 20) abgelegt sind.

5. Verfahren nach einem der Ansprüche 1 oder 2, **dadurch gekennzeichnet, dass** bis auf eine Anzahl $M$ aktiver Gleichspannungswandler (20) zur Deckung eines Grundlaststroms $N$-$M$ aktive Gleichspannungswandler (12, 14, 16, 18) jeweils mit einem möglichst gleichen Wandlerwirkungsgrad ($\eta_v$) oder mit möglichst gleich großem Wandlerstrom ($I_v$) arbeiten.

6. Verfahren nach einem der vorhergehenden Ansprüche, **dadurch gekennzeichnet, dass** durch den die Master-Funktion ausübenden Gleichspannungswandler (12) eine Deaktivierung eines der bereits $N$ aktiven Gleichspannungswandler (12, 14, 16, 18) in umgekehrter Reihenfolge erfolgt.

7. Verfahren nach einem der vorhergehenden Ansprüche, **dadurch gekennzeichnet, dass** zumindest einer der Gleichspannungswandler (12, 14, 16, 18, 20) als Spannungsquelle sowie die übrigen Gleichspannungswandler als Stromquellen arbeiten.

8. Verfahren nach einem der vorhergehenden Ansprüche, **dadurch gekennzeichnet, dass** der die Master-Funktion ausübende Gleichspannungswandler (12) als Spannungsquelle arbeitet.

9. Verfahren nach einem der vorhergehenden Ansprüche, **dadurch gekennzeichnet, dass** die Gleichspannungswandler (12, 14, 16, 18, 20) Daten über eine zusätzliche Verbindung (24) miteinander austauschen.

10. Verfahren nach einem der vorhergehenden Ansprüche, **dadurch gekennzeichnet, dass** nur der die Master-Funktion ausübende Gleichspannungswandler (12) aktiv ist, wenn ein erster Wandlerstromgrenzwert ($I_{G,A}$) durch den Laststrom (I) noch nicht überschritten wurde.

11. Verfahren nach einem der vorhergehenden Ansprüche, **dadurch gekennzeichnet, dass** bei ansteigendem Laststrom (I) über einen durch die Anzahl Z aller Gleichspannungswandler (12, 14, 16, 18, 20) definierten, letzten Wandlerstromgrenzwert ($I_{G,Y}$) hinaus alle Gleichspannungswandler (12, 14, 16, 18, 20) zur Deckung des Laststromes (I) bei weiterhin möglichst gleich großen Wandlerströmen ($I_v$) und/oder Wandlerwirkungsgraden ($\eta_v$) bis an ihre Belastungsgrenze betrieben werden.

12. Verfahren nach einem der vorhergehenden Ansprüche, **dadurch gekennzeichnet, dass** die Regelung des Parallelbetriebs mehrerer Gleichspannungswandler (12, 14, 16, 18, 20) in einem Mehrspannungsnetz eines Kraftfahrzeugs mit mindestens zwei Spannungsebenen ($U_e$, $U_a$) erfolgt.

13. Vorrichtung zur Regelung des Parallelbetriebs einer Anzahl Z von Gleichspannungswandlern (12, 14, 16, 18, 20), die jeweils eine charakteristische Wirkungsgradkennlinie (28) in Abhängigkeit von einem Wandlerstrom ($I_v$) aufweisen, mit

- einem ersten, eine Master-Funktion ausübenden Gleichspannungswandler (12),
- Stromerfassungsmitteln (26) zur Ermittlung des für die Versorgung einer Last (22) erforderlichen Laststroms (I)
- und zumindest Z-1 weiteren, eine Slave-Funktion ausübenden Gleichspannungswandler (14, 16, 18, 20), welche parallel zu dem die Master-Funktion ausübenden Gleichspannungswandler (12) angeordnet sind, wobei die Ausgänge der Gleichspannungswandler (12, 14, 16, 18, 20) über eine Versorgungsleitung (23) miteinander und mit der Last (22) verbunden sind,

**dadurch gekennzeichnet, dass**

- mittels des die Master-Funktion ausübenden Gleichspannungswandlers (12) zusätzlich zu einer Anzahl $N$-1 bereits aktiver Gleichspannungswandler (12, 14, 16) ein weiterer Gleichspannungswandler (18) aktivierbar ist, wenn der Laststrom (I) soweit ansteigt, dass die Wandlerströme ($I_v$) der $N$-1 bereits aktiven Gleichspannungswandler (12, 14, 16) einen jeweiligen Wandlerstromgrenzwert ($I_{G,\mu}$) auf der charakteristischen Wirkungsgradkennlinie (28) erreichen, für den bei nahezu unverändertem Systemwirkungsgrad ($\eta_{S,\mu}$) ein im Verhältnis ($N$-1)/$N$ reduzierter Stromwert ($I'_\mu$) auf der charakteristischen Wirkungsgradkennlinie (28) existiert,
- nur der die Master-Funktion ausübenden Gleichspannungswandler (12) aktiv ist, wenn ein erster Wandlerstromgrenzwert ($I_{G,A}$) durch den Laststrom (I) noch nicht überschritten ist,

14. Vorrichtung nach Anspruch 13, **dadurch gekennzeichnet, dass** bei Überschreiten eines durch die Anzahl Z aller Gleichspannungswandler (12, 14, 16, 18, 20) definierten, letzten Wandlerstromgrenzwertes ($I_{G,Y}$) durch den Laststrom (I) alle Gleichspannungswandler (12, 14, 16, 18, 20) zur Deckung des Laststromes (I) bei weiterhin möglichst gleich großen Wandlerströmen ($I_v$) und/oder Wandlerwirkungsgraden ($\eta_v$) bis an ihre Belastungsgrenze betreibbar sind.

15. Vorrichtung nach Anspruch 13, **dadurch gekennzeichnet, dass** bis auf eine Anzahl M aktiver Gleichspannungswandler (20) zur Deckung eines Grundlaststroms $N$-$M$ aktive Gleichspannungswandler (12, 14, 16) jeweils mit einem möglichst gleichen Wandlerwirkungsgrad ($\eta_v$) oder mit möglichst gleich großem Wandlerstrom ($I_v$) arbeiten.

16. Vorrichtung nach einem der Ansprüche 13 bis 15, **dadurch gekennzeichnet, dass** eine Deaktivierung eines der bereits $N$ aktiven Gleichspannungswandler (12, 14, 16, 18) durch den die Master-Funktion ausübenden Gleichspannungswandler (12) in umgekehrter Reihenfolge durchführbar ist.

**17.** Vorrichtung nach einem der Ansprüche 13 bis 16, **dadurch gekennzeichnet, dass** zumindest einer der Gleichspannungswandler (12, 14, 16, 18, 20) als Spannungsquelle sowie die übrigen Gleichspannungswandler als Stromquellen arbeiten.

**18.** Vorrichtung nach einem der Ansprüche 13 bis 17, **dadurch gekennzeichnet, dass** der die Master-Funktion ausübende Gleichspannungswandler (12) als Spannungsquelle arbeitet.

**19.** Vorrichtung nach einem der Ansprüche 13 bis 18, **dadurch gekennzeichnet, dass** alle Gleichspannungswandler (12, 14, 16, 18, 20) durch eine zusätzliche Verbindung (24) miteinander verbindbar sind.

**20.** Vorrichtung nach einem der Ansprüche 11 bis 16, **dadurch gekennzeichnet, dass** die Regelung des Parallelbetriebs mehrerer Gleichspannungswandler (12, 14, 16, 18, 20) in einem Mehrspannungsbordnetz mit mindestens zwei Spannungsebenen ($U_e$, $U_a$) erfolgt.

Fig. 1

Fig. 2

Fig. 3

Fig. 4

| $\mu$ | $I_{G,\mu}$ | $I$ | $N$ |
|---|---|---|---|
| —— | —— | $O \ldots \quad 1A$ | 1 |
| A | 1A | $1A \ldots \quad 1{,}64A$ | 2 |
| B | 0,82A | $1{,}64A \ldots 2{,}31A$ | 3 |
| C | 0,77A | $2{,}31A \ldots 4 \cdot I_{G,D}$ | 4 |
| ⋮ | ⋮ | ⋮ | ⋮ |
| Y | 0,67A | $(Z-1) \cdot I_{G,Y} \ldots I_{max}$ | Z |